(19) Europäisches Patentamt / European Patent Office / Office européen des brevets

(11) **EP 4 283 342 B1**

(12) **EUROPEAN PATENT SPECIFICATION**

(45) Date of publication and mention of the grant of the patent:
**06.11.2024 Bulletin 2024/45**

(21) Application number: **23175401.1**

(22) Date of filing: **25.05.2023**

(51) International Patent Classification (IPC):
**G01S 19/14** (2010.01)    **G01S 19/52** (2010.01)
**B61L 25/02** (2006.01)

(52) Cooperative Patent Classification (CPC):
**G01S 19/14; B61L 25/021; B61L 25/025; G01S 19/52;** B61L 2205/04

(54) **METHOD FOR DETERMINATION OF INTERVAL ESTIMATION OF VELOCITY MAGNITUDE OF RAILWAY VEHICLE USING GNSS AND SUBSYSTEM TO IMPLEMENT THIS METHOD**

VERFAHREN ZUR BESTIMMUNG DER INTERVALLSCHÄTZUNG DER GESCHWINDIGKEITSGRÖSSE EINES SCHIENENFAHRZEUGS MITTELS GNSS UND SUBSYSTEM ZUR IMPLEMENTIERUNG DIESES VERFAHRENS

PROCÉDÉ DE DÉTERMINATION D'UNE ESTIMATION D'INTERVALLE DE L'AMPLITUDE DE VITESSE D'UN VÉHICULE FERROVIAIRE À L'AIDE D'UN GNSS ET SOUS-SYSTÈME POUR METTRE EN OEUVRE CE PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**

(30) Priority: **27.05.2022 CZ 20220221**

(43) Date of publication of application:
**29.11.2023 Bulletin 2023/48**

(73) Proprietor: **AZD Praha S.R.O.**
**106 17 Praha 10 - Zabehlice (CZ)**

(72) Inventors:
• **PUNCOCHAR, Ivo**
  **35734 Nové Sedlo (CZ)**

• **KRÁL, Ladislav**
  **30100 Plzen (CZ)**
• **STRAKA, Ondrej**
  **30100 Plzen (CZ)**
• **VESELÝ, Karel**
  **43401 Most (CZ)**

(74) Representative: **Kratochvil, Vaclav**
**Patent and Trademark Office**
**P.O. Box 26**
**295 01 Mnichovo Hradiste (CZ)**

(56) References cited:
CA-A1- 2 733 032        CA-A1- 3 100 131
US-A1- 2002 173 881     US-A1- 2022 043 167

**Description**

Technical Field

The invention relates to a method for determination of the interval estimation of the velocity magnitude of a railway vehicle using GNSS and a subsystem to implement this method.

Background Art

Global navigation satellite systems (GNSS) are commonly used for determination of location and navigation in many transport systems. In the railway transport, GNSS is commonly used for example in systems used to inform passengers about the position of the train. Nevertheless, GNSS is currently not applied in signalling systems used to control the railway transport in functions where GNSS would be used for direct provision of safe information. However, the increasing interest of parties involved in the railway transport, a large number of relevant European projects (De Miguel et al., 2017; Marais et al., 2017), and the effort to certify GNSS for train localization Filip et al. (2018); Rispoli et al. (2018) indicate a strong will to use GNSS also in functions related to safety.

In order to obtain the safe estimate of location using GNSS, an augmented system known as Satellite Based Augmentation System (SBAS) was developed for aviation. A part of this system is formed by a precisely defined calculation method for a safe estimate of location for the aviation environment. However, this method cannot be directly applied in railway conditions since the surrounding environment of the receiver antenna is significantly different from aviation conditions. This difference which is caused by the presence of tunnels, forest canyons, urban development, etc. results in a more difficult reception of satellite signals including both signal unavailability and in the possibility to receive signals which are burdened by disturbances caused by the surrounding environment of the receiver antenna. It is the possible presence of these challenging environments that significantly complicates the application of methods for estimate calculation which have been developed for the aviation. The successful application of GNSS for functions related to railway safety is thus conditioned by further improvement of the GNSS performance, especially in terms of the integrity of the estimates provided.

Although GNSS is designed for determination of location estimation, it can also be used for determination of the velocity vector and the velocity magnitude. Therefore, the application of GNSS represents an alternative to existing velocity magnitude sensors, e.g. incremental rotary encoder, Doppler radar or eddy current sensor. The main advantages of the estimation of the velocity vector or the velocity magnitude based on GNSS include lower mechanical stress of sensors used, easily accessible installation or absence of wheel slipping or sliding.

There are at least three methods for determination of the velocity vector estimation from GNSS measurements only. The simplest method is the calculation of the velocity vector estimate as a difference between two consequent location estimates, which difference is divided by the sampling period. The main disadvantage of this method is the low accuracy in the order of m/s which relates to the accuracy of the location estimate calculated from pseudorange measurements. A better precision can be reached using GNSS receivers which provide measurements via Doppler frequency shifts (Dyukov et al., 2015; Gaglione & Petovello, 2015). This second method is also quite simple for implementation with accuracy of cm/s. The third method uses the carrier wave phase measurement and provides the most accurate estimates in the order of mm/s (Ding & Wang, 2011; Freda et al., 2015). This last method is the most demanding with respect to the implementation due to so-called "cycle slips", which must be eliminated using robust techniques (Karaim et al., 2014).

If the estimation of the velocity vector or the velocity magnitude is determined for use in the function related to safety, it is necessary to perform a safety analysis of the estimation method. This analysis can be more demanding for the first and the third method since they use the measurements from more time instants.

In all cases, the accuracy of the estimation of the velocity vector or the velocity magnitude can be further improved by fusion of information from an inertial measurement unit (IMU), a dynamic model, a track map, etc. (Niu et al., 2018; Otegi et al., 2018; Zhang et al., 2020). Although the use of additional information can result in a very accurate estimation, the estimation method can become quite complex and more difficult to assess with respect to safety due to issues with convergence of recursive processing, limited accuracy of the dynamic model or the track map, or the ability to maintain all information sources up-to-date, e.g. construction changes of the rail in case the track map is used.

Contrary to other transport systems, the railway track represents a strict limitation for the railway vehicle location. The velocity vector is then almost tangential to the railway track. For this reason, the determination of only a velocity magnitude estimate, e.g. a speedometer with requested properties, is often sufficient in railway applications. However, since the point estimate of velocity magnitude is not sufficient information in functions related to safety, it is necessary to construct the estimate in the form of a confidence interval of the velocity magnitude for which it applies that this interval covers the actual velocity magnitude with the desired probability. The transition from the point estimate of the velocity magnitude to the velocity magnitude estimate in the form of a confidence interval, or the method to this transition, represents the special characteristics of the below described method which distinguishes it from many existing methods, which on top of that do not provide the confidence interval of the velocity magnitude estimate but rather a covariance matrix of the velocity magnitude estimate error only, although this interval is critical for the functions related to safety. Moreover, current methods are more general and are not adopted to the railway environment in order to meet high safety requirements while maintaining the sufficient estimation accuracy, if necessary.

The point estimate of the receiver antenna velocity vector can be determined from the location of the GNSS receiver antenna and the measurement of the Doppler shift using the standard method of weighted least squares. Subsequently, a confidence set can be construed for this point estimate. The transition from the set velocity vector estimate to the interval velocity magnitude estimate in the form of a confidence interval is a challenge which can be formulated as an optimization task. The solution to this task can be approached, for example, by a form of an iteration algorithm and various approximations which can result in lower accuracy of the interval velocity magnitude estimate or a more complex provability of achieving the correct result due to numerical approaches applied. Especially the second mentioned disadvantage can adversely affect the possibility of use of the interval velocity magnitude estimate in safety-relevant applications.

Alternatively, the interval velocity magnitude estimate can be construed using further easier or harder to access information. Since the estimate accuracy of the vertical velocity component is in case of GNSS worse than in comparison with horizontal components, the use of other information sources about the vertical component magnitude can improve the accuracy of the interval velocity magnitude estimate. This can be of interest especially for the railway where the longitudinal railway slope is usually quite small due to the requirements for the track construction. It is this fact that is used in the method described in this invention application.

CA 03100131 relates to a high-integrity autonomous location system for locating a train in a rail network reference frame.

US 2022/043167 relates to techniques for calculating protection levels for velocity and course over ground. In an embodiment, a global navigation satellite system (GNSS) receiver utilizes phase range rate measurements (Doppler measurements) and variance measurements to calculate protection levels for velocity (i.e., estimated velocity) and course over ground computed at a GNSS receiver.

In the conclusion of this chapter, the current deficiencies of existing methods for determination of the interval estimate of the vehicle velocity magnitude using GNSS in the railway environment can be summarized by the following paragraphs.

The existing methods are not targeted on the railway environment, which can sometimes lead to an unnecessarily inaccurate estimate. If the sufficient information applicable for the railway environment was used, more accurate interval velocity magnitude estimates could be achieved.

If the sufficient information, e.g. a track map, is already used, it is frequently difficult and expensive to obtain such information, or to maintain its current validity. Also, it may not be easy to reflect the possible inaccuracy of the additional information, e.g. in this very case of the track map.

In case of the estimate, only a point estimate without giving the confidence level in this estimate is frequently provided. The confidence level is alternatively stated rather for the velocity vector estimate then for the velocity magnitude estimate.

The implementation of the applied method is not always easy. At the same time, it is true that a complex implementation can complicate proving the safety of the estimate in case of its intended use in safety-relevant systems.

Sometimes, approximate approaches to the transition from the velocity vector estimate to the interval velocity magnitude estimate are used. In these approximations, it may be more complicated to prove the safety in case of the planned application of the estimate as safetycritical information. For example, various omissions in determining the interval estimate may cause the estimate not to actually meet the desired coverage probability. A typical omission example can be e.g. omitting the vertical velocity component.

A complication can also be in the use of numerical methods to solve the optimization task, where it may be sometimes more difficult to prove that they converged up to the correct solution. This can be a disadvantage in case of a planned use of the interval estimate in safety-relevant applications.

Summary of Invention

To a great extent, the above stated deficiencies are eliminated by the method for determination of the interval estimation of the velocity magnitude of a railway vehicle using GNSS, which is developed directly for the railway transport and is the subject of this invention application. Concurrently, the method uses the fact that only a limited magnitude of the longitudinal slope of the track is allowed in the railway environment, and this slope reaches relatively small values. The knowledge of the maximum possible longitudinal slope of the track enables to construct relatively accurate interval estimates of the vehicle velocity magnitude in the horizontal plane and the vertical direction. The resulting interval estimate of the velocity magnitude is then determined by combining these two partial interval estimates. In more detail, the summary of the invention can be expressed that, at first, the point estimate of the vehicle velocity vector is determined, including the confidence ellipsoid derived from the covariance matrix and the required coverage probability of the actual velocity by a set estimate in the ECEF WGS84 coordinate system. Consequently, this set estimate is transformed into the local END coordinate system. From the set estimate of the velocity vector thus transformed, a set estimate of the velocity vector in the horizontal plane is determined, which estimate is used for determination of the confidence interval of $\langle \hat{v}_{EN,min}, \hat{v}_{EN,max} \rangle$ representing the interval estimate of the velocity magnitude in the horizontal plane. Subsequently, an interval estimate of the velocity magnitude in the vertical direction is determined from the maximum possible longitudinal slope of the track and the design speed of the vehicle. Alternatively, when determining the interval estimate of the velocity magnitude in the vertical direction, the value $\hat{v}_{EN,max}$ can be used instead of the design speed of the vehicle. Finally, the interval estimates of the velocity magnitude in the horizontal plane and in the vertical direction are combined into the final interval estimate of the velocity magnitude of the railway vehicle expressed by a confidence interval. This interval estimate is appropriately shown on the display, depending on the intended use of the information, and stored into the memory, e.g. for further analyses of the vehicle velocity and/or forwarded to a superior, especially safety, system supervising the movement of the vehicle.

Another summary of the invention is the subsystem itself for the implementation of the mentioned method using GNSS satellites and a GNSS receiver on the vehicle. This subsystem is provided with a bus to which, besides the GNSS receiver, also memory, monitor, processor, data memory and another memory are connected. Its detail arrangement is seen in the schematic diagram which is stated and described in more detail hereinafter in the invention application.

The object of the invention is to design a new method and a subsystem which will provide an interval estimate of the railway vehicle velocity magnitude using available measurements of the Doppler shift from one time instant, the maximum absolute value of the longitudinal rail slope and, if necessary, the design speed of the rail vehicle. However, the use of the last information is not necessary, as will be seen in the following text. When designing the method, the non-iterative calculation is preferred over the iterative one in order the possible use of the designed subsystem in a safety-relevant application could dispense with a complicated proof of the convergence of the iterative calculation and limited error propagation.

It is therefore evident from the previous paragraph that the method described in this invention application is designed to that it used only measurements from one time instant and as least external information as possible, which information is also easy to maintain in its current state. Due to this characteristics, the developed method is easy to implement and more easily applicable in safety-relevant applications, especially after performing suitable augmentation which consist in considering the fact that the measured data can be subject not only to noise but also malfunction.

Thus, the main advantages of the subsystem developed here are as follows.

The additional information, e.g. the maximum possible track slope or also the design vehicle speed used during the estimate calculation are easy to ascertain and maintain, contrary to e.g. the whole track map. This decreases the costs for equipment operation and maintenance.

Due to the use of additional information, the determination of the estimate is easier to implement than to solve classic optimization tasks used for determination of the interval estimate of the velocity magnitude.

The interval estimate of the velocity magnitude determined by the method here described is in most cases more accurate than the interval estimate of the velocity magnitude determined directly from the confidence ellipsoid, which is obtained during the calculation of the velocity vector estimate.

In the calculation, nothing is omitted, thus the confidence interval will contain the actual velocity magnitude with the desired or higher probability, assuming the absence of disturbances in GNSS measurements. This represents the advantage when using the subsystem in safety-relevant applications.

The interval estimate can be determined analytically. Therefore, it is not necessary to solve the optimization task using numerical methods. This can represent an advantage in case the method is used in safety-relevant applications.

Brief Description of Drawings

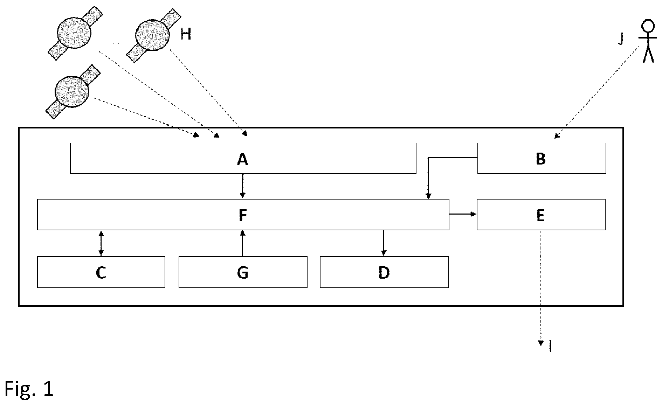

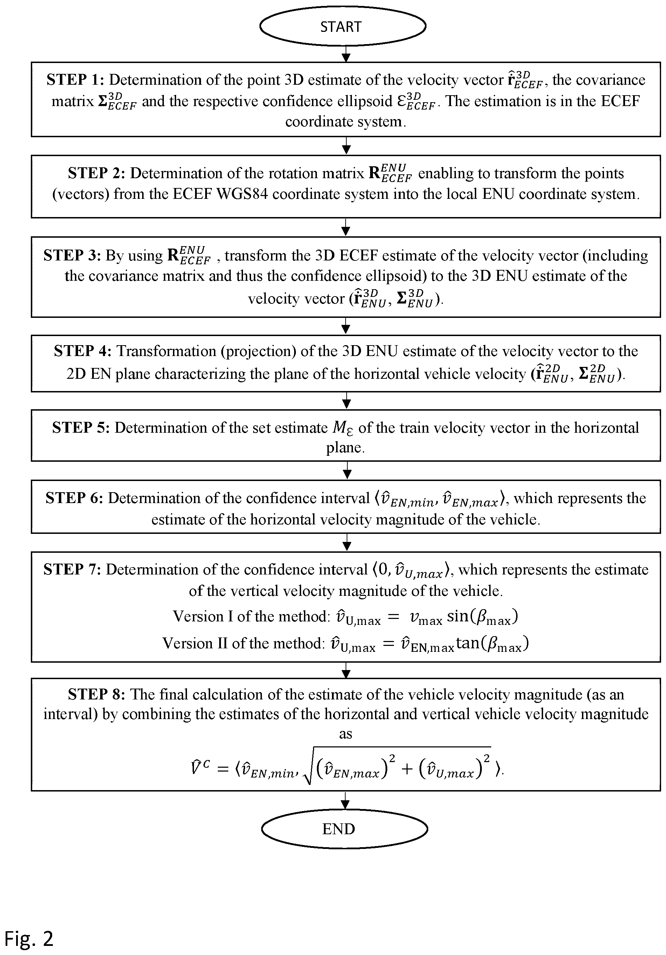

The method for determination of the interval estimate of the velocity magnitude of a railway vehicle using GNSS and the subsystem implementing this method will be described in more detail on a particular example of the invention embodiment using the attached schematic diagram and the flow chart. Fig. 1 is a schematic diagram of the subsystem which implements the designed method for determination of the interval estimate of the velocity magnitude of a railway vehicle, and provides this estimate to other subsystems located on the vehicle. Fig. 2 is a flow chart briefly representing the designed method.

Description of Embodiments

The subsystem implementing the method for determination of the interval estimate of the velocity magnitude of a railway vehicle using GNSS contains a GNSS receiver A receiving information from GNSS satellites, which receiver is connected with a processor $\underline{C}$, Memory 1 $\underline{B}$, Memory 2 $\underline{E}$ and Memory 3 $\underline{G}$ via a bus $\underline{F}$. Furthermore, a monitor $\underline{D}$ can be connected to the bus $\underline{F}$.

The input points of the subsystem are the GNSS receiver $\underline{A}$ and Memory 1 $\underline{B}$. The developed subsystem via the GNSS receiver $\underline{A}$ obtains necessary measurements of Doppler frequency shifts and parameters for the calculation of locations and velocities of GNSS satellites $\underline{H}$. The locations and velocities of satellites themselves can be calculated either directly in the GNSS receiver $\underline{A}$ or alternatively in the processor $\underline{C}$. Into Memory 1 $\underline{B}$, values, e.g. the maximum possible longitudinal slope $\beta_{max}$ of the track is stored either online or offline, if necessary, also the design speed $v_{max}$ of the railway vehicle, the wave length of the carrier wave, standard deviations of measurement noises, required probability $p_{poz}$ of the coverage of the actual velocity magnitude by the interval estimate, or the current location or estimate of the current location of the vehicle, if this location is not determined inside the subsystem itself, e.g. in the GNSS receiver $\underline{A}$. At the same time, it is true that most parameters can be input into the subsystem or Memory 1 $\underline{B}$ directly during the subsystem installation to the vehicle or even before, and then these parameters are changed only exceptionally, e.g. when the design speed changes. The process of entering parameters is designated as $\underline{J}$ in the schematic diagram in Fig. 1.

All activities which are described in the text below are carried out in the processor $\underline{C}$. The results, respective interval estimate of the vehicle velocity magnitude can be then shown on the monitor $\underline{D}$. It should be noted that the monitor $\underline{D}$ does not have to necessarily be a part of the subsystem. The monitor $\underline{D}$ is included especially when the subsystem is to be used as a speedometer. The results are also stored in Memory 2 $\underline{E}$, out of which they can be forwarded, either online or offline, which is indicated in the schematic diagram by the arrow leading from Memory 2 $\underline{E}$, to other railway systems and used e.g. for monitoring that the maximum permitted vehicle speed is not exceeded in the given area, or showing the information on the display of the display unit which does not form a part of the subsystem here described. The process of result forwarding to external railway systems itself is designated as $\underline{I}$ in the schematic diagram in Fig. 1.

The remaining two blocks are auxiliary and are used to ensure the functioning of the entire subsystem. All the communication among other subsystem blocks is carried via the bus F, and the programme implementation of the method itself is stored in Memory 3 $\underline{G}$.

In the following text, the new method for determination of the interval estimate of the velocity magnitude is described in more detail. It is a clearly arranged description of the method which has been briefly described in the previous text. It is to be noted that, strictly speaking, there are two versions of the method written in one when the difference between the versions is in a different implementation of Step 7. In the developed subsystem, the whole method is implemented in the processor $\underline{C}$, wherein its programme implementation, i.e. one particular version out of the two described below, is stored in Memory 3 $\underline{G}$. The method inputs are obtained from the GNSS receiver $\underline{A}$ and Memory 1 $\underline{B}$ via the bus $\underline{F}$. The method output is than stored in Memory 2 $\underline{E}$ and/or displayed using the monitor $\underline{D}$.

The method inputs for determination of the interval estimation of the velocity magnitude of a railway vehicle using GNSS: The GNSS measurements and information, i.e. the measured Doppler frequency shift for respective satellites from one time instant, the location and the velocity of GNSS satellites from the corresponding time instant, standard deviations of noises of respective measurements, the wave length of the carrier wave; the location or the location estimate of the GNSS antenna; $\beta_{max}$ - the maximum possible longitudinal slope of the track; $p_{poz}$ - the required probability of coverage of the actual velocity magnitude by the interval estimate.

The input necessary only for Version I: design speed $v_{max}$ of the railway vehicle
Method output: the interval estimate of the velocity magnitude in the form of a confidence interval $\hat{V}^c$, for which it applies that the actual velocity magnitude lies within this interval with the probability of at least $p_{poz}$.

The respective steps of the developed method for determination of the interval estimate of the velocity magnitude of a railway vehicle using GNSS resulting in the determination of the confidence interval representing the interval estimated of the velocity magnitude:

1. Determination of the point estimate of the velocity vector $\hat{\mathbf{r}}^{3D}_{ECEF}$, including a covariance matrix $\boldsymbol{\Sigma}^{3D}_{ECEF}$ in the ECEF WGS84 coordinate system characterizing the relevant confidence ellipsoid. When assuming the normal distribution of noises, the confidence ellipsoid $\mathcal{E}^{3D}_{ECEF}$ is then typically defined by the relation of

$$\mathcal{E}^{3D}_{ECEF} = \left\{ \boldsymbol{u} \in \mathbb{R}^3 \colon \left( \boldsymbol{u} - \hat{\mathbf{r}}^{3D}_{ECEF} \right)^T \left( \boldsymbol{\Sigma}^{3D}_{ECEF} \right)^{-1} \left( \boldsymbol{u} - \hat{\mathbf{r}}^{3D}_{ECEF} \right) \le q_{3,p_{poz}} \right\},$$

where the parameter $q_{3,p_{poz}}$ represents the quantile of $\chi^2$ distribution with three degrees of freedom for the input probability $p_{poz}$.
Determination of the point estimate and the covariance matrix can be implemented e.g. by the method of weighted least squares.

2. Determination of the rotation matrix $\mathbf{R}_{ECEF}^{ENU}$ enabling to transform the points and the vectors from the ECEF WGS84 coordinate system into the local END coordinate system.

This matrix is given by the relation of

$$\mathbf{R}_{ECEF}^{ENU} = \begin{bmatrix} -\sin(\lambda) & \cos(\lambda) & 0 \\ -\sin(L)\cos(\lambda) & -\sin(L)\sin(\lambda) & \cos(L) \\ \cos(L)\cos(\lambda) & \cos(L)\sin(\lambda) & \sin(L) \end{bmatrix},$$

where L represents the latitude and $\lambda$ the longitude of the antenna location estimate.

The local END is a right-handed orthonormal 3D coordinate system, the orientation towards the ECEF coordinate system of which is given by the location of the receiver, or its point estimate, in which the receiver is present in the time instant for which the velocity magnitude estimate is calculated. However, the origin of this coordinate system is identical with the origin of the ECEF coordinate system. The EN plane of the system is tangential to the WGS84 reference ellipsoid in the point of the receiver location estimate, wherein the first axis E of the system directs towards the East and the second axis N directs towards the North. The third axis U is perpendicular to the resting axes E and N, and its direction is given by the system righthandedness.

3. Using the rotation matrix from Paragraph 2, express the point estimate of the velocity vector, the covariance matrix and the confidence ellipsoid from Paragraph 1 in the local END coordinate system defined in Paragraph 2. This results in the point estimate of the vehicle velocity vector

$$\hat{\mathbf{r}}_{ENU}^{3D} = \left(\mathbf{R}_{ECEF}^{ENU}\right)^{T} \hat{\mathbf{r}}_{ECEF}^{3D}$$

and a respective covariance matrix

$$\mathbf{\Sigma}_{ENU}^{3D} = \left(\mathbf{R}_{ECEF}^{ENU}\right)^{T} \mathbf{\Sigma}_{ECEF}^{3D} \mathbf{R}_{ECEF}^{ENU}$$

clearly defining the confidence ellipsoid in the END coordinate system.

4. Transform, or project, the point estimate of the velocity vector and the respective covariance matrix characterizing the confidence ellipsoid from Paragraph 3 ( $\hat{\mathbf{r}}_{ENU}^{3D}$ and $\mathbf{\Sigma}_{ENU}^{3D}$ ) to the horizontal (EN) plane of the local END coordinate system from Paragraph 2. The transformation output is a 2D point estimate $\hat{\mathbf{r}}_{ENU}^{2D}$ of the horizontal vehicle velocity and a respective 2x2 covariance matrix $\mathbf{\Sigma}_{ENU}^{2D}$ . Values $\hat{\mathbf{r}}_{ENU}^{2D}$ and $\mathbf{\Sigma}_{ENU}^{2D}$ are determined as the first two components of vector $\hat{\mathbf{r}}_{ENU}^{3D}$ and the first and the second row and column of the matrix $\mathbf{\Sigma}_{ENU}^{3D}$ .

5. Using the probability $p_{poz}$ and values $\hat{\mathbf{r}}_{ENU}^{2D}$ and $\mathbf{\Sigma}_{ENU}^{2D}$ , determine the confidence ellipsoid $\mathcal{E}_{EN}^{2D}$ in the EN plane, which ellipsoid (ellipse + all points inside the ellipse) defines a set estimate $M_{\varepsilon}$ of the horizontal component of the train velocity for which it applies that the actual horizontal velocity of the vehicle is inside the ellipse $\mathcal{E}_{EN}^{2D}$ with the probability $p_{poz}$.

When defining the confidence ellipse in this case, when assuming a normal noise distribution, the distribution quantile $\chi^2$ with two degrees of freedom is used for the input probability $p_{poz}$. Otherwise, the definition method is the same as in the case of the 3D space

$$\mathcal{E}_{ENU}^{2D} = \left\{ \boldsymbol{u} \in \mathbb{R}^2 : \left(\boldsymbol{u} - \hat{\mathbf{r}}_{ENU}^{2D}\right)^{T} \left(\mathbf{\Sigma}_{ENU}^{2D}\right)^{-1} \left(\boldsymbol{u} - \hat{\mathbf{r}}_{ENU}^{2D}\right) = q_{2,p_{poz}} \right\}.$$

6. Determine, using $\mathcal{E}_{EN}^{2D}$ or $M_{\varepsilon}$, the confidence interval of $\langle \hat{v}_{EN,min}, \hat{v}_{EN,max} \rangle$ representing the estimate of the horizontal velocity magnitude of the vehicle. Values $\hat{v}_{EN,min}$ and $\hat{v}_{EN,max}$ represent the minimum and the maximum distance of the origin of the END coordinate system from the set estimate $M_\varepsilon$. These distances can be determined analytically by solving a suitable quartic equation.

The maximum distance is always on the ellipse $\varepsilon_{EN}^{2D}$ . The minimum distance is either on the ellipse $\varepsilon_{EN}^{2D}$ or has the value of 0 - if the END origin lies inside the ellipse $\varepsilon_{EN}^{2D}$ .

7. Determine the confidence interval of $\langle 0, \hat{v}_{U,max} \rangle$ representing the estimate of the vertical velocity magnitude of the vehicle. The value $\hat{v}_{U,max}$ can be determined using two methods. There are two versions of the proposed method.

a. Version I: The value $\hat{v}_{U,max}$ is determined using the maximum possible longitudinal slope of the track $\beta_{max}$ and the vehicle design speed $v_{max}$ as

$$ \text{i.} \quad \hat{v}_{U,max} = v_{max} \sin(\beta_{max}). $$

b. Version II: The value $\hat{v}_{U,max}$ is determined using the maximum possible longitudinal slope of the track $\beta_{max}$ and the value $\hat{v}_{EN,max}$ determined in the previous paragraph as

$$ \text{i.} \quad \hat{v}_{U,max} = \hat{v}_{EN,max} \tan(\beta_{max}). $$

8. Determine the method output, i.e. determine the resulting estimate of the receiver velocity magnitude represented by the confidence interval $\hat{V}^c$ as

$$ \text{c.} \quad \hat{V}^C = \langle \hat{v}_{EN,min}, \sqrt{\left(\hat{v}_{EN,max}\right)^2 + \left(\hat{v}_{U,max}\right)^2} \; \rangle. $$

The presented method can be briefly represented using a flow chart in Fig. 2.

The experimental verification of the developed method.

The developed method was experimentally evaluated using simulation data. The evaluation focused on the analysis of the lengths obtained from interval estimates, i.e. for estimate accuracy analysis, and for comparison of the obtained accuracy of both method versions presented in this invention application with obtained accuracy of alternative methods for the calculation of the velocity magnitude estimate. During these analyses, the estimate accuracy was evaluated depending on various satellite constellations, various vehicle velocity magnitudes and various longitudinal slopes of the railway track. The longitudinal slope of the vehicle was selected from the interval of $\langle -\beta_{max}, \beta_{max} \rangle$, where the value $\beta_{max}$ was determined based on the rules for the railway track design in the Czech Republic. The velocity magnitude was considered in the interval of $\langle 0; 80km/h \rangle$, wherein this interval was selected with respect to the common velocities of railway vehicles on regional tracks in the Czech Republic. However, it is to be mentioned that the use of the method and the whole subsystem is not of course limited only to regional tracks. The satellite constellations were then selected with regard to the conditions of the satellite visibility in the railway environment.

A more detailed description of experimental tests and obtained results are not a subject of this invention application. Hereinafter, only resulting main observations are stated.

1. The length of the interval estimation of the velocity magnitude is almost independent from a particular value of the actual longitudinal slope of the track, which is from the interval of $\langle -\beta_{max}, \beta_{max} \rangle$.
However, it is not suitable to automatically extend this conclusion also to the values of the longitudinal slope of the track which does not belong to the analyzed interval of $\langle -\beta_{max}, \beta_{max} \rangle$.

2. It is true that in situations with an excellent satellite constellation, a small longitudinal track slope and a slower vehicle velocity, Version I of the developed method obtains less accurate estimates than classic, i.e. commonly used methods, and also than Version II of the developed method. The reason is the fact that the use of the maximum possible longitudinal slope of the rail together with the design speed of the vehicle results in more conservative estimates of the vertical vehicle velocity than those which can be obtained from actual measurements of Doppler shifts and the actual noise, or its properties.

3. Version II of the developed method obtains more accurate estimates than all the other tested methods, with a few exceptions. These exceptions include a very good satellite geometry and a concurrently higher vehicle velocity.

The method that is completely sporadically more accurate then Version II of the developed system is the method which uses numerical methods during calculation, and its use in a safety-relevant application could be more complex than the use of the method here described for determination of the interval estimate of the velocity magnitude of a railway vehicle using GNSS.

Industrial Applicability

The invention will find its use especially in railway transport, however, it is not limited hereto.

Reference Signs List

A    GNSS receiver with antenna
B    Memory 1 (flash)
C    Processor
D    Monitor
E    Memory 2 (HDD, database)
F    Bus
G    Memory 3 (ROM or EPROM)
H    GNSS satellite
I    Subsystem output (online or offline) into external devices (via agreed protocol)
J    External setting of required parameters

**Claims**

1. A method for determination of the interval estimation of the velocity magnitude of a railway vehicle using GNSS in the railway environment, during which a receiver on the railway vehicle monitors signals from GNSS satellites wherein initially, (step 1) an estimate of the vehicle velocity vector, including the confidence ellipsoid are determined in the ECEF WGS84 coordinate system, and subsequently (step 3) said estimate is transformed into the local END coordinate system; furthermore, (step 4) from such transformed velocity vector estimate, a 2D estimate of the velocity vector in the horizontal plane is determined, from which (step 6) a confidence interval of $\langle \hat{v}_{EN,min}, \hat{v}_{EN,max} \rangle$ representing the estimate of the horizontal velocity magnitude of the vehicle is determined, and subsequently, (step 7) an estimate $\hat{v}_{U,max}$ of the maximum possible magnitude of the vertical vehicle velocity is determined from the maximum possible longitudinal slope $\beta_{max}$ of the track and the design speed of the vehicle or the estimate of the horizontal velocity magnitude of the vehicle, after which (step 8) the estimates of horizontal and vertical velocity magnitudes are combined into the final interval estimate of the total magnitude of the railway vehicle velocity, which is given by the relation of

$$\hat{V}^C = \langle \hat{v}_{EN,min}, \sqrt{\left(\hat{v}_{EN,max}\right)^2 + \left(\hat{v}_{U,max}\right)^2} \rangle$$

, and thus obtained estimate is stored into the memory and/or shown on the display.

2. The method according to Claim 1 wherein the estimate of the magnitude of the vertical velocity $\hat{v}_{U,max}$ of the vehicle is given (step 7, version I of the method) by the relation of $\hat{v}_{U,max} = v_{max} \sin(\beta_{max})$, where $v_{max}$ is the vehicle design speed.

3. The method according to Claim 1 wherein the estimate of the magnitude of the vertical velocity $\hat{v}_{U,max}$ of the vehicle is given (step 7, version II of the method) by the relation of $\hat{v}_{U,max} = \hat{v}_{EN,max} \tan(\beta_{max})$.

4. The method according to any of Claims 1 to 3 wherein the obtained estimate of the railway vehicle velocity magnitude is provided via a communication protocol by an external equipment.

5. A subsystem adapted for implementation of the method according to any of Claims 1 to 4 wherein it contains a GNSS receiver (A) receiving signals from GNSS satellites, which receiver is connected to a bus (F) to which Memory 1 (B), a processor (C), Memory 2 (E) and Memory 3 (G) are connected.

**6.** The subsystem according to Claim 5 wherein a monitor (D) is connected to the bus (F).

**Patentansprüche**

**1.** Ein Verfahren zur Bestimmung der Intervall-Abschätzung der Größe der Geschwindigkeit eines Schienenfahrzeugs unter Verwendung von GNSS in einer Eisenbahnumgebung, bei dem ein Empfänger auf dem Schienenfahrzeug Signale von GNSS-Satelliten überwacht, wobei zuerst (Schritt 1) eine Abschätzung des Fahrzeuggeschwindigkeitsvektors, einschließlich eines Konfidenzellipsoids, im ECEF WGS84-Koordinatensystem bestimmt wird, und dann (Schritt 3) diese Abschätzung in das lokale ENU-Koordinatensystem transformiert wird, dann (Schritt 4) eine 2D-Abschätzung des Geschwindigkeitsvektors in der horizontalen Ebene aus der transformierten Geschwindigkeitsvektorschätzung bestimmt wird, aus dem (Schritt 6) ein Konfidenzintervall $\langle \hat{v}_{\text{EN,min}}, \hat{v}_{\text{EN,max}} \rangle$ bestimmt wird, das die Schätzung des horizontalen Geschwindigkeitsbetrags des Fahrzeugs darstellt, und dann (Schritt 7)die maximal mögliche Längsneigung $\beta_{\text{max}}$ der Bahn und die bauartbedingte Geschwindigkeit des Fahrzeugs oder eine Abschätzung der horizontalen Geschwindigkeitsgröße des Fahrzeugs verwendet werden, um eine Abschätzung $\hat{v}_{\text{U,max}}$ der maximal möglichen vertikalen Geschwindigkeitsgröße des Fahrzeugs zu erhalten, woraufhin (Schritt 8) die Abschätzungen der horizontalen und vertikalen Geschwindigkeitsgrößen zu einer endgültigen Intervall-Abschätzung der Gesamtgeschwindigkeitsgröße des Eisenbahnfahrzeugs kombiniert werden, die durch das Verhältnis

$$\hat{V}^{\text{C}} = \langle \hat{v}_{\text{EN,min}}, \sqrt{\left( \hat{v}_{\text{EN,max}} \right)^2 + \left( \hat{v}_{\text{U,max}} \right)^2} \rangle$$

gegeben ist, und die so erhaltene Abschätzung wird gespeichert und/oder auf dem Display angezeigt.

**2.** Verfahren nach Anspruch 1, wobei die Abschätzung der Größe der Vertikalgeschwindigkeit $\hat{v}_{\text{U,max}}$ des Fahrzeugs durch das Verhältnis $\hat{v}_{\text{U,max}} = v_{\text{max}} \sin(\beta_{\text{max}})$ gegeben ist (Schritt 7, Version I des Verfahrens), wobei $v_{\text{max}}$ die Konstruktionsgeschwindigkeit des Fahrzeugs ist.

**3.** Verfahren nach Anspruch 1, wobei die Abschätzung der Größe der Vertikalgeschwindigkeit $\hat{v}_{\text{U,max}}$ des Fahrzeugs (Schritt 7, Version II des Verfahrens) durch das Verhältnis $\hat{v}_{\text{U,max}} = \hat{v}_{\text{EN,max}} \tan(\beta_{\text{max}})$ gegeben ist.

**4.** Verfahren nach einem der Ansprüche 1 bis 3, wobei die erhaltene Abschätzung der Größe der Geschwindigkeit des Schienenfahrzeugs über ein Kommunikationsprotokoll durch ein externes Gerät übermittelt wird.

**5.** Teilsystem zur Durchführung des Verfahrens nach einem der Ansprüche 1 bis 4, wobei mit einem GNSS-Empfänger (A), der Signale von GNSS-Satelliten empfängt und mit einem Bussystem (F) verbunden ist, an den Speicher 1 (B), ein Prozessor (C), Speicher 2 (E) und Speicher 3 (G) angeschlossen sind.

**6.** Teilsystem nach Anspruch 5, wobei ein Monitor (D) mit dem Bussystem (F) verbunden ist.

**Revendications**

**1.** Procédé de détermination d'une estimation d'intervalle de la vitesse d'un véhicule ferroviaire à l'aide du GNSS dans un environnement ferroviaire, où un récepteur sur le véhicule ferroviaire suit les signaux provenant de satellites GNSS, tandis que d'abord (étape 1) une estimation du vecteur de vitesse du véhicule incluant un ellipsoïde de confiance est déterminée dans le système de coordonnées ECEF WGS84, puis (étape 3) cette estimation est transformée dans le système de coordination ENU local, ensuite (étape 4), à partir de l'estimation du vecteur de vitesse ainsi transformée, une estimation 2D du vecteur de vitesse dans le plan horizontal est déterminée, à partir de laquelle (étape 6) un intervalle de confiance $\langle \hat{v}_{\text{EN,min}}, \hat{v}_{\text{EN,max}} \rangle$ est déterminé représentant une estimation de la vitesse horizontale du véhicule, et puis (étape 7), à partir de la pente longitudinale maximale possible de la $\beta_{\text{max}}$ voie et de la vitesse de conception du véhicule, ou de l'estimation de la vitesse horizontale du véhicule, une estimation de la $\hat{v}_{\text{U,max}}$ vitesse maximale possible verticale du véhicule est déterminée, après quoi (étape 8) les estimations des vitesses horizontale et verticale sont combinées en une estimation d'intervalle finale de la vitesse totale du véhicule ferroviaire, qui est donnée par la relation $\hat{V}^{\text{C}} =$ $\langle \hat{v}_{\text{EN,min}}, \sqrt{\left( \hat{v}_{\text{EN,max}} \right)^2 + \left( \hat{v}_{\text{U,max}} \right)^2} \rangle$ et l'estimation

ainsi obtenue est stockée en mémoire et/ou affichée sur l'écran.

2. Procédé selon la revendication 1, où l'estimation de la vitesse verticale $\hat{v}_{U,max}$ du véhicule est donnée (étape 7, version I de ce procédé) par la relation $\hat{v}_{U,max} = v_{max} \sin(\beta_{max})$, où $v_{max}$ est la vitesse de conception du véhicule.

3. Procédé selon la revendication 1, l'estimation de la vitesse verticale $\hat{v}_{U,max}$ du véhicule est donnée (étape 7, version II de ce procédé) par la relation $\hat{v}_{U,max} = \hat{v}_{EN,max} \tan(\beta_{max})$.

4. Procédé selon l'une quelconque des revendications 1 à 3, où l'estimation obtenue de la vitesse du véhicule ferroviaire est fournie via un protocole de communication par un dispositif externe.

5. Sous-système adapté pour mettre en oeuvre le procédé selon l'une quelconque des revendications 1 à 4, comprenant un récepteur GNSS (A) recevant des signaux des satellites GNSS, qui est connecté à un bus (F), auquel sont connectés une mémoire 1 (B), un processeur (C), une mémoire 2 (E) et une mémoire 3 (G).

6. Sous-système selon la revendication 5, un écran (D) étant connecté au bus (F).

Fig. 1

START

**STEP 1:** Determination of the point 3D estimate of the velocity vector $\hat{\mathbf{r}}_{ECEF}^{3D}$, the covariance matrix $\mathbf{\Sigma}_{ECEF}^{3D}$ and the respective confidence ellipsoid $\mathcal{E}_{ECEF}^{3D}$. The estimation is in the ECEF coordinate system.

**STEP 2:** Determination of the rotation matrix $\mathbf{R}_{ECEF}^{ENU}$ enabling to transform the points (vectors) from the ECEF WGS84 coordinate system into the local ENU coordinate system.

**STEP 3:** By using $\mathbf{R}_{ECEF}^{ENU}$, transform the 3D ECEF estimate of the velocity vector (including the covariance matrix and thus the confidence ellipsoid) to the 3D ENU estimate of the velocity vector ($\hat{\mathbf{r}}_{ENU}^{3D}$, $\mathbf{\Sigma}_{ENU}^{3D}$).

**STEP 4:** Transformation (projection) of the 3D ENU estimate of the velocity vector to the 2D EN plane characterizing the plane of the horizontal vehicle velocity ($\hat{\mathbf{r}}_{ENU}^{2D}$, $\mathbf{\Sigma}_{ENU}^{2D}$).

**STEP 5:** Determination of the set estimate $M_{\mathcal{E}}$ of the train velocity vector in the horizontal plane.

**STEP 6:** Determination of the confidence interval $\langle \hat{v}_{EN,min}, \hat{v}_{EN,max} \rangle$, which represents the estimate of the horizontal velocity magnitude of the vehicle.

**STEP 7:** Determination of the confidence interval $\langle 0, \hat{v}_{U,max} \rangle$, which represents the estimate of the vertical velocity magnitude of the vehicle.

Version I of the method: $\hat{v}_{U,max} = v_{max} \sin(\beta_{max})$

Version II of the method: $\hat{v}_{U,max} = \hat{v}_{EN,max} \tan(\beta_{max})$

**STEP 8:** The final calculation of the estimate of the vehicle velocity magnitude (as an interval) by combining the estimates of the horizontal and vertical vehicle velocity magnitude as

$$\hat{V}^C = \langle \hat{v}_{EN,min}, \sqrt{\left(\hat{v}_{EN,max}\right)^2 + \left(\hat{v}_{U,max}\right)^2} \rangle.$$

END

Fig. 2

**REFERENCES CITED IN THE DESCRIPTION**

**Patent documents cited in the description**

- CA 03100131

- US 2022043167 A